# EUROPÄISCHE PATENTANMELDUNG

(11) **EP 4 621 128 A1**
(43) Veröffentlichungstag der Anmeldung: **24.09.2025**
(21) Anmeldenummer: 24164397.2
(22) Anmeldetag: 19.03.2024
(51) Int. Cl.: E01C 19/48, B60L 9/00, B60L 53/12, E01C 19/00

(54) **STRASSENBAUMASCHINE MIT DRAHTLOSER ENERGIEÜBERTRAGUNG**

(71) Anmelder: Joseph Vögele AG, 67067 Ludwigshafen (DE)
(72) Erfinder: RÖSEL, Moritz, 67067 Ludwigshafen (DE)
(74) Vertreter: Grünecker Patent- und Rechtsanwälte PartG mbB

(57) **Zusammenfassung**

Eine Straßenbaumaschine (1), wobei die Straßenbaumaschine (1) ein Straßenfertiger (2) zum Herstellen einer Einbauschicht (ES) aus einem Einbaumaterial (EM) oder ein Beschickerfahrzeug (200) zum Beliefern des Straßenfertigers (2) mit Einbaumaterial (EM) ist, umfasst einen Elektroantrieb (3) zum Antreiben der Straßenbaumaschine (1) und/oder zumindest einen elektrischen Verbraucher (11, 211). Die Straßenbaumaschine umfasst ferner eine Empfangsvorrichtung (14, 214) für elektrische Energie. Die Empfangsvorrichtung (14, 214) ist zum drahtlosen Empfangen von elektrischer Energie von einer externen Sendevorrichtung und zum Weiterleiten der elektrischen Energie an den Elektroantrieb (3) und/oder den elektrischen Verbraucher (11, 211) ausgebildet.

## Beschreibung

Die vorliegende Erfindung bezieht sich auf eine Straßenbaumaschine, ein System zum drahtlosen Versorgen einer Straßenbaumaschine mit elektrischer Energie sowie ein Verfahren zum Betreiben einer Straßenbaumaschine.

### Stand der Technik

Straßenbaumaschinen sind aus dem Stand der Technik allgemein bekannt. Diese können zum Beispiel ein Straßenfertiger zum Herstellen einer Einbauschicht aus einem Einbaumaterial oder ein Beschickerfahrzeug zum Beliefern des Straßenfertigers mit dem Einbaumaterial sein.

Herkömmliche Straßenbaumaschinen verwenden üblicherweise einen Dieselkraftstoff als Energiequelle. Derzeitige Straßenbaumaschinen mit Dieseltank sind so ausgelegt, dass diese mit einer Tankfüllung maximal zehn Stunden lang angetrieben werden und eine bestimmte Reichweite erreichen können. Dabei wird von einer hohen bis maximalen Auslastung der Straßenbaumaschine ausgegangen. Ferner ist aus dem Stand der Technik bereits bekannt, dass Straßenbaumaschinen elektrisch betrieben werden können. Bei elektrifizierten Straßenbaumaschinen ist aber die geringere Reichweite der Straßenbaumaschine problematisch. Beim Einsatz eines Energiespeichers für eine elektrifizierte Straßenbaumaschine, wie beispielsweise einer Batterie, zum Beispiel eines Akkumulators (Akku), als Energiequelle und elektrischer Antriebsstränge, müssten aufgrund der geringeren Energiedichte eines Akkus im Vergleich zu der Energiedichte von Dieselkraftstoff zum Erreichen ähnlicher Reichweiten deutlich größere und schwerere Energiespeicher eingesetzt werden. Da dies nur in begrenztem Maße realisiert werden kann, ohne die Stra-βenbaumaschine drastisch zu vergrößern, folgt in Konsequenz eine deutliche Einschränkung der Arbeitszeit bzw. Arbeitsmenge, die eine elektrifizierte Straßenbaumaschine erbringen kann. Aufgrund der geringeren Reichweite einer elektrifizierten Straßenbaumaschine mit einem Akku als Energiequelle müsste der Akku ein- oder mehrmalig getauscht bzw. nachgeladen werden. Alternativ müsste die Straßenbaumaschine mit dem leeren Akku von der Baustelle weggefahren werden, damit als Ersatz eine andere Straßenbaumaschine mit einem geladenen Akku eingesetzt werden kann. Folglich müsste die Baustelle kurzzeitig oder für einen längeren Zeitraum unterbrochen werden. Dies ist nicht nur nachteilig für die Energieeffizienz der Straßenbaumaschine (z.B. müssen die Bohle und die Materialförderer nach der Unterbrechung wieder aufgewärmt werden), sondern auch für die Einbauqualität. Denn Unterbrechungen führen potenziell zu Anfahrmarken, Entmischung, Temperaturabfall des Mischguts, Verdichtungsproblemen, bis hin zum Erkalten und Verfestigen des Einbaumaterials in der Straßenbaumaschine.

### Aufgabe

Ausgehend von dem bekannten Stand der Technik besteht die zu lösende technische Aufgabe darin, eine Straßenbaumaschine, ein System zum drahtlosen Versorgen einer Straßenbaumaschine mit elektrischer Energie oder ein Verfahren zum Betreiben einer Straßenbaumaschine anzugeben, die die oben genannten Nachteile beseitigen oder zumindest reduzieren. Im Idealfall soll eine Reichweite und/oder Einsatzdauer der Straßenbaumaschine erhöht werden.

### Lösung

Diese Aufgabe wird erfindungsgemäß durch eine Straßenbaumaschine gemäß dem Anspruch 1, ein System zum drahtlosen Versorgen einer Straßenbaumaschine mit elektrischer Energie gemäß dem Anspruch 9 oder ein Verfahren zum Betreiben einer Straßenbaumaschine gemäß dem Anspruch 14 gelöst.

Vorteilhafte Weiterbildungen der Erfindung sind in den Unteransprüchen erfasst.

Gemäß einem Aspekt der Erfindung wird eine Straßenbaumaschine bereitgestellt. Die Stra-βenbaumaschine ist ein Straßenfertiger zum Herstellen einer Einbauschicht aus einem Einbaumaterial oder ein Beschickerfahrzeug zum Beliefern des Straßenfertigers mit Einbaumaterial. Die Straßenbaumaschine umfasst einen Elektroantrieb zum Antreiben der Straßenbaumaschine und/oder zumindest einen elektrischen Verbraucher. Die Straßenbaumaschine umfasst ferner eine Empfangsvorrichtung für elektrische Energie. Die Empfangsvorrichtung ist zum drahtlosen Empfangen von elektrischer Energie von einer externen Sendevorrichtung und zum Weiterleiten der elektrischen Energie an den Elektroantrieb und/oder den elektrischen Verbraucher ausgebildet. Dadurch kann ein besonders einfaches und zuverlässiges Versorgen der Straßenbaumaschine mit elektrischer Energie erreicht werden. Der Elektroantrieb und/oder die Verbraucher können mit der Empfangsvorrichtung über ein Kabel verbunden sein. Der Elektroantrieb und/oder die Verbraucher können durch die Empfangsvorrichtung unmittelbar mit Energie versorgt werden. Dadurch kann die Notwendigkeit eines Speichers, insbesondere zwischen der Empfangsvorrichtung und dem Elektroantrieb und/oder Verbraucher, entfallen. Im Idealfall kann dadurch ein Gewicht der Straßenbaumaschine reduziert werden und/oder die Straßenbaumaschine besonders kompakt ausgeführt werden. Optional kann der durch den eingesparten Speicher erforderliche Bauraum für andere Komponenten der Straßenbaumaschine genutzt werden. Im Idealfall kann eine Verlängerung der Einsatzzeit und/oder Reichweite der Straßenbaumaschine erreicht werden. Indem die Straßenbaumaschine nicht durch einen Speicher betrieben werden muss, insbesondere indem die Straßenbaumaschine unmittelbar durch die Empfangsvorrichtung mit Energie versorgt werden kann, kann vermieden werden, kann die Straßenbaumaschine unabhängig von einer Ladekapazität des Speichers betrieben werden. Es kann zum Beispiel vermieden werden, die Straßenbaumaschine zu einer stationären Ladestation zu fahren, um dort den Speicher aufzuladen. Dadurch kann die Straßenbaumaschine effizient genutzt werden. Im Idealfall kann vermieden werden, dass die Straßenbaumaschine eine Einbaufahrt, insbesondere das Herstellen der Einbauschicht aus dem Einbaumaterial durch den Straßenfertiger und/oder das Beliefern des Straßenfertigers mit dem Einbaumaterial durch das Beschickerfahrzeug, stoppen muss. Da Einbauaggregate der Straßenbaumaschine, wie Bohle und Materialförderer, nach einer Unterbrechung in der Regel wieder aufgewärmt werden müssen, kann die Erfindung optional eine Energieeffizienz der Straßenbaumaschine erhöhen. Optional kann dies eine Einbauqualität der Einbauschicht verbessern.

Die Energie kann drahtlos zum Beispiel induktiv übertragen werden. Das heißt zwischen der Sendevorrichtung und der Empfangsvorrichtung kann ein elektrisches Magnetfeld aufgebaut werden, über das Energie übertragen werden kann. Die Sendevorrichtung kann dazu ausgebildet sein, die elektrische Energie in elektromagnetische Energie umzuwandeln und, insbesondere gebündelt, drahtlos auszusenden. Die Empfangsvorrichtung kann dazu ausgebildet sein, die elektromagnetische Energie in elektrische Energie umzuwandeln. Die Sendevorrichtung und/oder die Empfangsvorrichtung kann eine von Strom durchfließbare Spule aufweisen.

Der Elektroantrieb kann eine Brennstoffzelle umfassen. Zusätzlich oder anstelle des Elektroantriebs kann ein Verbrennungsantrieb zum Antreiben der Straßenbaumaschine vorgesehen sein. Die Wahl des Antriebs kann von Art, Ort und/oder Dauer des Einsatzzwecks der Straßenbaumaschine abhängig sein. Mit einem Elektroantrieb kann die Straßenbaumaschine betrieben werden, ohne direkt Schadstoffe auszustoßen. Im Idealfall kann die Straßenbaumaschine geräuscharm betrieben werden. Dies kann insbesondere von Vorteil sein, wenn die Straßenbaumaschine nur ein begrenztes Maß an Geräuschen oder Schadstoffen emittieren soll, zum Beispiel, wenn sie in oder in der Nähe einer Ortschaft betrieben werden soll. Ein Verbrennungsantrieb kann einen im Vergleich zu einer mit einem Elektroantrieb betriebenen Straßenbaumaschine relativ günstigen Betrieb der Straßenbaumaschine mit hoher Reichweite ermöglichen. Dies kann insbesondere von Vorteil sein, wenn es keine Anforderungen an Geräusch- oder Schadstoffbegrenzungen gibt oder wenn die Straßenbaumaschine über weite Strecken ohne Unterbrechung betrieben werden soll.

Der elektrische Verbraucher kann ein beliebiger, zur Verwendung der Straßenbaumaschine erforderlicher, Verbraucher sein. Der Verbraucher kann an dem Straßenfertiger beispielsweise eine elektrisch betriebene Beleuchtung, eine elektrisch betriebene Heizvorrichtung, ein elektrisch betriebenes Elektro-Hydraulikaggregat, eine elektrisch betriebene Steuerungs-, Bedien- und/oder Anzeigevorrichtung, eine elektrisch betriebene Längsfördervorrichtung und/oder eine elektrisch betriebene Querfördervorrichtung sein. Der Verbraucher kann an dem Beschickerfahrzeug beispielsweise eine elektrisch betriebene Beleuchtung, eine elektrisch betriebene Fördereinrichtung für Einbaugut und/oder eine elektrisch betriebene Heizvorrichtung des Beschickerfahrzeugs sein.

Die Straßenbaumaschine kann ferner eine Steuerungsvorrichtung aufweisen. Die Steuerungsvorrichtung kann dazu konfiguriert sein, den Betrieb der Straßenbaumaschine zu steuern.

Vorzugsweise weist die Empfangsvorrichtung eine, insbesondere plattenförmige, Empfangsantenne auf. Dadurch kann die Empfangsvorrichtung besonders einfach und günstig ausgebildet sein. Optional kann ein besonders einfaches und insbesondere zuverlässiges Empfangen der elektrischen Energie ermöglicht werden. Die Empfangsantenne kann an einem oberen und/oder seitlichen Bereich der Straßenbaumaschine, zum Beispiel an einem Fahrerdach eines Bedienstands der Straßenbaumaschine, montiert sein. Insbesondere kann die Empfangsantenne zur Umgebung exponiert, d.h. nicht durch Komponenten der Straßenbaumaschine verdeckt, sein. Dadurch können Störungen beim Empfangen der elektrischen Energie verringert werden. Die Empfangsantenne kann eine Fläche zum Empfangen von elektrischer Energie von mindestens etwa 1 m², vorzugsweise mindestens etwa 1,5 m², und/oder höchstens etwa 6 m², vorzugsweise höchstens etwa 3 m², aufweisen. Eine größere Fläche kann das Empfangen von elektrischer Energie vereinfachen.

Vorzugsweise umfasst die drahtlos übertragene elektrische Energie mehrere gebündelte, insbesondere hochfrequente, elektrische Signale. Dies kann eine gezielte und insbesondere effiziente Versorgung der Straßenbaumaschine mit Energie ermöglichen. Im Idealfall können atmosphärische und Streuverluste reduziert werden. Optional kann ein für Lebewesen, die sich in der Umgebung der Straßenbaumaschine befinden, besonders sicheres Übertragen der Energie ermöglicht werden, da wenig Strahlung in der Umgebung um das Energiebündel herum übertragen wird. Dies kann eine Arbeitssicherheit erhöhen. Die Frequenz des elektrischen Signals kann insbesondere davon abhängen, wie viele Signale, d.h. wie viel Energie, und/oder wie weit und/oder wie schnell das Signal übertragen werden soll. Zum Beispiel kann das elektrische Signale in einem Bereich von mindestens etwa 80 kHz, vorzugsweise mindestens etwa 2 GHz, und/oder höchstens etwa 30 GHz, vorzugsweise höchstens etwa 10 GHz, liegen.

Die elektrische Energie kann im Bereich von mindestens etwa 5 W, vorzugsweise mindestens etwa 150 W, und/oder höchstens etwa 500 kW, vorzugsweise höchstens etwa 400 kW, liegen. Dadurch kann die Straßenbaumaschine zuverlässig mit der für den Einbaubetrieb, insbesondere den Elektroantrieb und/oder den Verbraucher, erforderlichen Energie versorgt werden. Die übertragene elektrische Energie kann, insbesondere abhängig von der Übertragungsstrecke, einem Energiebedarf der Straßenbaumaschine, insbesondere des Elektroantriebs und/oder des elektrischen Verbrauchers und/oder einem Ladestand eines nachfolgend beschriebenen Pufferspeichers der Straßenbaumaschine, skalierbar sein. Das heißt, bei einem erhöhten Energiebedarf der Straßenbaumaschine kann zum Beispiel Energie mit höherer Leistung übertragen werden.

Vorzugsweise ist die Empfangsvorrichtung dazu ausgebildet, während einer Einbaufahrt der Straßenbaumaschine drahtlos elektrische Energie zu empfangen. Dadurch kann die Straßenbaumaschine während der Einbaufahrt mit elektrischer Energie versorgt werden. Im Idealfall kann vermieden werden, die Straßenbaumaschine aufgrund Energiemangels zu stoppen. Optional kann die Empfangsvorrichtung vor und/oder nach der Einbaufahrt der Straßenbaumaschine drahtlos elektrische Energie empfangen. Die Energie kann dann zum Beispiel an einen nachfolgend beschriebenen Pufferspeicher weitergeleitet und dort gespeichert werden. Während der Einbaufahrt kann dann der Pufferspeicher die Straßenbaumaschine mit elektrischer Energie versorgen.

Vorzugsweise umfasst die Straßenbaumaschine zumindest einen wieder aufladbaren Pufferspeicher, wobei der Pufferspeicher zum Empfangen und Speichern elektrischer Energie von der Empfangsvorrichtung und zum Versorgen des Elektroantriebs und/oder des elektrischen Verbrauchers mit elektrischer Energie ausgebildet ist. Somit können der Elektroantrieb und/oder die Verbraucher durch die Empfangsvorrichtung mittelbar über den Pufferspeicher mit Energie versorgt werden. Es kann ein zuverlässiger Betrieb der Straßenbaumaschine während der Einbaufahrt ermöglicht werden. Der Pufferspeicher kann eine Ausfallsicherheit der Straßenbaumaschine erhöhen, indem die Straßenbaumaschine über die Empfangsvorrichtung und/oder den Pufferspeicher mit elektrischer Energie versorgt werden kann. Der Pufferspeicher kann eine wieder aufladbare Batterie, zum Beispiel ein Akkumulator (Akku), sein. Der Pufferspeicher kann ein Hochvoltspeicher, insbesondere mit mehreren Batterien, oder ein Superkondensator sein. Sowohl der Hochvoltspeicher als auch der Superkondensator kann schnell geladen und entladen werden, d.h. der Straßenbaumaschine schnell Energie bereitstellen. Ferner können insbesondere Superkondensatoren auch bei niedrigen Umgebungstemperaturen effizient betrieben werden.

Der Pufferspeicher kann ein Batteriemanagementsystem zum Überwachen und/oder Steuern des Lade- und/oder Entladevorgangs, insbesondere eines Zellenstroms und/oder einer Zellenspannung und/oder einer Zellentemperatur, des Pufferspeichers aufweisen. Das Batteriemanagementsystem kann einen Ladestand des Pufferspeichers überwachen und/oder steuern. Der Pufferspeicher kann einen minimalen Ladestand und einen maximalen Ladestand aufweisen. Der minimale Ladestand kann etwa 10 %, vorzugsweise etwa 15 % betragen. Der maximale Ladestand kann etwa 100%, vorzugsweise etwa 98 %, betragen. Das Batteriemanagementsystem kann das Entladen des Pufferspeichers derart steuern, dass der minimale Ladestand, der zu einer Schädigung des Pufferspeichers führen kann, nicht unterschritten wird. Das Batteriemanagementsystem kann das Laden des Pufferspeichers derart steuern, dass, wenn der maximale Ladestand erreicht ist, der Pufferspeicher keine Energie mehr von der Empfangsvorrichtung aufnehmen kann. Das Batteriemanagementsystem kann das Laden des Pufferspeichers derart steuern, dass, wenn der maximale Ladestand unterschritten ist, der Pufferspeicher Energie von der Empfangsvorrichtung aufnehmen kann.

Die Straßenbaumaschine kann den Ladevorgang des Pufferspeichers, insbesondere automatisiert, initiieren und/oder beenden. Insbesondere kann die Empfangsvorrichtung und/oder das Batteriemanagementsystem und/oder die Steuerungsvorrichtung den Ladevorgang des Pufferspeichers, insbesondere automatisiert, initiieren und/oder beenden. Optional kann ein Bediener der Straßenbaumaschine den Ladevorgang des Pufferspeichers manuell initiieren und/oder beenden. Die Straßenbaumaschine, insbesondere die Empfangsvorrichtung und/oder die Steuerungsvorrichtung, und/oder die Sendevorrichtung, insbesondere eine Steuerung, kann das Empfangen von elektrischer Energie mittels der Empfangsvorrichtung, insbesondere automatisiert, initiieren und/oder beenden. Optional kann ein Bediener der Straßenbaumaschine das Empfangen von elektrischer Energie manuell initiieren und/oder beenden. Die Empfangsvorrichtung kann zeitgleich elektrische Energie an den Elektroantrieb und/oder den Verbraucher und/oder den Pufferspeicher weiterleiten. Der Elektroantrieb und/oder der Verbraucher kann zeitgleich mit elektrischer Energie von der Empfangsvorrichtung und dem Pufferspeicher versorgt werden, beispielsweise, wenn eine von der Empfangsvorrichtung bereitgestellte Energie für die Bewegung der Straßenbaumaschine und/oder Versorgung des Verbrauchers nicht ausreicht oder andersherum. Der Pufferspeicher kann zeitgleich Energie empfangen und abgeben.

Die Straßenbaumaschine und die Sendevorrichtung können miteinander, insbesondere drahtlos, kommunikativ verbunden sein. Die Empfangsvorrichtung und/oder das Batteriemanagementsystem und/oder die Steuerungsvorrichtung und/oder der Elektroantrieb und/oder der Verbraucher und/oder eine nachfolgend beschriebene Empfangs-Positionsüberwachungseinheit und/oder ein nachfolgend beschriebener Objektdetektor und/oder eine nachfolgend beschriebene Energieweiterleitungsvorrichtung und/oder eine nachfolgend beschriebene Anzeigevorrichtung können miteinander, insbesondere drahtlos oder über ein Kabel, kommunikativ verbunden sein.

Vorzugsweise umfasst die Straßenbaumaschine eine Empfangs-Positionsüberwachungseinheit zum Überwachen einer Empfangsvorrichtungs-Position und einer Sendevorrichtungs-Position. Die Straßenbaumaschine kann insbesondere dazu ausgebildet sein, eine Übertragungsstrecke zum drahtlosen Übertragen von elektrischer Energie zwischen der Sendevorrichtungs-Position und der Empfangsvorrichtungs-Position zu bestimmen. Dadurch kann eine Position der Straßenbaumaschine und der Sendevorrichtung und insbesondere deren Entfernung zueinander überwacht werden. Dies kann einen zuverlässigen Betrieb der Straßenbaumaschine während der Einbaufahrt unterstützen. Die Empfangsvorrichtung kann die Empfangs-Positionsüberwachungseinheit aufweisen oder mit ihr kommunikativ verbunden sein. Die Empfangs-Positionsüberwachungseinheit kann einen Positionssensor, zum Beispiel GPS-Sensor, umfassen, um die Empfangsvorrichtungs-Position zu bestimmen. Die Empfangs-Positionsüberwachungseinheit kann dazu ausgebildet sein, die Sendevorrichtungs-Position von der Sendevorrichtung zu empfangen. Die Empfangsvorrichtungs-Position kann eine Position der Empfangsvorrichtung, insbesondere der Empfangsantenne, angeben. Die Sendevorrichtungs-Position kann eine Position der Sendevorrichtung, insbesondere der Sendeantenne, angeben. Die Übertragungsstrecke kann einen Abstand zwischen der Sendevorrichtungs-Position und der Empfangsvorrichtungs-Position angeben. Die Empfangsvorrichtung, insbesondere die Empfangs-Positionsüberwachungseinheit, und/oder die Steuerungsvorrichtung der Straßenbaumaschine kann dazu ausgebildet sein, die Übertragungsstrecke zu bestimmen. Die Straßenbaumaschine kann die Empfangsvorrichtungs-Position und/oder die Übertragungsstrecke an die Sendevorrichtung weiterleiten. Die ermittelte Empfangsvorrichtungs-Position und Sendevorrichtungs-Position kann durch die Steuerungsvorrichtung verarbeitet werden, um die Position der Empfangsvorrichtung aktiv zu steuern. Dies kann die Effizienz der Energieübertragung erhöhen. Die Ermittlung der Empfangs- und Sendevorrichtungsposition kann optional basierend auf der Detektierung eines, vorzugsweise gerichteten, Leitsignals der Straßenbaumaschine und/oder der Sendevorrichtung innerhalb des übertragenen Energiebündels erfolgen.

Wenn die Übertragungsstrecke höchstens einer maximalen Übertragungsstrecke entspricht, kann die Empfangsvorrichtung elektrische Energie empfangen. Die maximale Übertragungsstrecke kann höchstens etwa 1000 m, vorzugsweise höchstens etwa 500 m, vorzugsweise höchstens etwa 100 m, betragen. Wenn die Übertragungsstrecke etwa 90 %, vorzugsweise etwa 80%, der maximalen Übertragungsstrecke ist, d.h., wenn der Abstand zwischen der Sendevorrichtungs-Position und der Empfangsvorrichtungs-Position noch klein genug für das Übertragen elektrischer Energie ist, kann die Empfangsvorrichtung elektrische Energie an den Pufferspeicher weiterleiten. Wenn die Übertragungsstrecke die maximale Übertragungsstrecke überschreitet, d.h., wenn die Straßenbaumaschine für die Energieübertragung zu weit von der Sendevorrichtung entfernt ist, kann die Straßenbaumaschine über den Pufferspeicher mit Energie versorgt werden und die Einbaufahrt fortsetzen bzw. beenden. Dadurch kann die Ausfallsicherheit der Straßenbaumaschine erhöht werden. Optional kann die Anzeigevorrichtung einen Hinweis an den Bediener, eine zweite Straßenbaumaschine im Einbauzug, die Sendevorrichtung, eine zweite Sendevorrichtung und/oder eine externe Baustellensteuerung ausgeben, um darauf hinzuweisen, dass mit zunehmender Übertragungsstrecke eine Energieübertragung nicht mehr möglich sein könnte. Dies kann zum Beispiel sinnvoll sein, wenn sich die Straßenbaumaschine schnell von der Sendevorrichtung entfernt oder optional, wenn der Pufferspeicher sehr klein oder von niedriger Energiekapazität ist und/oder nur langsam geladen werden kann.

Vorzugsweise umfasst die Straßenbaumaschine einen Objektdetektor zum Detektieren von einem Objekt in der Übertragungsstrecke. Dadurch kann eine zuverlässige Versorgung der Stra-βenbaumaschine mit elektrischer Energie gewährleistet werden. Die Empfangsvorrichtung, insbesondere die Empfangs-Positionsüberwachungseinheit, kann den Objektdetektor aufweisen oder mit ihm kommunikativ verbunden sein. Der Objektdetektor kann wenigstens einen Radar-, Ultraschall-, Lidarsensor und/oder eine Kamera aufweisen, um das Objekt zu detektieren. Der Objektdetektor kann Signalzustände der empfangenen Energiebündel auswerten, um Informationen über detektierte Objekte zu gewinnen. Der Objektdetektor kann eine Information darüber, ob ein Objekt detektiert wurde oder nicht an die Straßenbaumaschine und/oder die Sendevorrichtung weiterleiten. Wenn in der Übertragungsstrecke kein Objekt detektiert ist, kann die Empfangsvorrichtung elektrische Energie empfangen. Wenn in der Übertragungsstrecke ein Objekt detektiert ist, kann die Empfangsvorrichtung keine elektrische Energie empfangen. Der Objektdetektor kann alle Signale, einzelne Signale oder einzelne Signalbereiche des empfangenen Energiebündels auswerten.

Die Straßenbaumaschine kann eine Anzeigevorrichtung aufweisen, um einen Energiebedarf der Straßenbaumaschine, insbesondere des Elektroantriebs und/oder des elektrischen Verbrauchers, und optional der Energieweiterleitungsvorrichtung anzuzeigen. Die Anzeigevorrichtung kann ferner dazu ausgebildet sein, eine von der Empfangsvorrichtung empfangene Energie und/oder einen Ladestand des Pufferspeichers anzuzeigen. Die Anzeigevorrichtung kann ferner dazu ausgebildet sein, die Sendevorrichtungs-Position und/oder die Empfangsvorrichtungs-Position und/oder die Übertragungsstrecke und/oder ein detektiertes Objekt anzeigen. Die Anzeige kann visuell und/oder akustisch sein. Die Anzeigevorrichtung kann ferner dazu ausgebildet sein, die manuelle Eingabe des Bedieners zu empfangen und an die Steuerungsvorrichtung weiterzuleiten. Zum Beispiel kann die Anzeigevorrichtung einen Bildschirm, ein Touchpad, eine Eingabetaste, einen Eingabeschalter und/oder einen Lautsprecher umfassen.

Vorzugsweise umfasst die Straßenbaumaschine eine Energieweiterleitungsvorrichtung zum drahtlosen Weiterleiten der elektrischen Energie von der Empfangsvorrichtung und/oder dem Pufferspeicher an eine zweite Straßenbaumaschine. Grundsätzlich kann die Energieweiterleitungsvorrichtung drahtlos elektrische Energie an jede Einheit mit einer zu der Energieweiterleitungsvorrichtung kompatiblen Empfangsvorrichtung weiterleiten. Dadurch kann die Straßenbaumaschine überschüssige Energie abgeben. Es kann ferner eine Reichweite und/oder Einsatzdauer der zweiten Straßenbaumaschine und insbesondere deren Ausfallsicherheit erhöht werden. Die Energieweiterleitungsvorrichtung kann eine Weiterleitungsantenne zum drahtlosen Senden der elektrischen Energie an die zweite Straßenbaumaschine, insbesondere eine zweite Empfangsvorrichtung, vorzugsweise eine zweite Empfangsantenne, aufweisen. Die Weiterleitungsantenne kann plattenförmig oder stabförmig sein. Die Weiterleitungsantenne kann an einem oberen und/oder seitlichen Bereich der Straßenbaumaschine montiert sein. Insbesondere kann die Weiterleitungsantenne zur Umgebung exponiert, d.h. nicht durch Komponenten der Straßenbaumaschine verdeckt, sein. Zum Beispiel kann die Weiterleitungsantenne an dem Fahrerdach des Bedienstands der Straßenbaumaschine montiert sein. Dadurch können Störungen beim Senden der elektrischen Energie verringert werden. Um die elektrische Energie von dem Pufferspeicher an die Energieweiterleitungsvorrichtung zu übertragen, können diese über ein Kabel verbunden sein. Während die Empfangsvorrichtung der Straßenbaumaschine elektrische Energie von der Sendevorrichtung empfängt und/oder an den Elektroantrieb und/oder den Verbraucher und/oder den Pufferspeicher weiterleitet, kann die Energieweiterleitungsvorrichtung zeitgleich elektrische Energie an die zweite Straßenbaumaschine weiterleiten.

Gemäß einem weiteren Aspekt der Erfindung wird ein System zum drahtlosen Versorgen einer ersten Straßenbaumaschine mit elektrischer Energie bereitgestellt. Das System umfasst eine erste Straßenbaumaschine mit einer ersten Empfangsvorrichtung zum drahtlosen Empfangen von elektrischer Energie. Das System umfasst ferner eine externe Sendevorrichtung zum drahtlosen Senden von elektrischer Energie an die erste Empfangsvorrichtung. Das System umfasst ferner eine Energiequelle zum Versorgen der Sendevorrichtung mit elektrischer Energie. Dadurch kann ein einfaches Versorgen der ersten Straßenbaumaschine mit elektrischer Energie erreicht werden. Es kann ein zuverlässiger Betrieb der ersten Straßenbaumaschine während der Einbaufahrt gewährleistet werden.

Die Sendevorrichtung kann elektrisch, insbesondere mit einem Kabel, mit der Energiequelle verbunden sein. Die Sendevorrichtung kann eine Steuerung zum Steuern des Betriebs der Sendevorrichtung aufweisen. Die Sendevorrichtung, insbesondere die Steuerung, kann kommunikativ mit der Energiequelle verbunden sein.

Die Energiequelle kann zum Beispiel ein lokales Energieverteilungsnetz sein. Optional kann die Energiequelle ein Wind-, Solar-, Wasserkraftwerk oder ein Verbrennungsantrieb, insbesondere mit einem Generator, sein.

Vorzugsweise ist die Sendevorrichtung stationär oder mobil. Insbesondere eine mobile Sendevorrichtung kann die Reichweite und/oder Einsatzdauer der ersten Straßenbaumaschine erhöhen. Die mobile Sendevorrichtung kann mit der ersten Straßenbaumaschine mitbewegt werden. Dadurch kann sichergestellt werden, dass die Übertragungsstrecke klein genug für eine Energieübertragung ist. Die Sendevorrichtung kann zum Beispiel an einem mobilen Fahrzeug montiert sein. Optional kann das mobile Fahrzeug die Energiequelle umfassen. Zum Beispiel kann das mobile Fahrzeug einen Energiespeicher aufweisen, der der Sendevorrichtung die zu übertragende Energie bereitstellt. Optional kann das mobile Fahrzeug die elektrische Energie, insbesondere mittels eines Verbrennungsantriebs und Generators, selbst erzeugen. Das System kann mehrere Sendevorrichtungen zum Versorgen der ersten Straßenbaumaschine mit Energie aufweisen. Zum Beispiel können an einer Baustelle mehrere stationäre Sendevorrichtungen vorgesehen sein. Dadurch kann sichergestellt werden, dass sich die erste Straßenbaumaschine nah genug an wenigstens einer der mehreren Sendevorrichtungen für die Energieübertragung befindet. Die Steuerung der Sendevorrichtung und/oder die Steuerungsvorrichtung der Straßenbaumaschine kann die eine oder mehreren Sendevorrichtungen der Straßenbaumaschine zuweisen, zum Beispiel basierend auf dem aktuellen Ort und/oder Betriebszustand der Straßenbaumaschine und/oder der Sendevorrichtung(en). Dadurch kann die Effizienz der Energieübertragung und optional der Straßenbaumaschine erhöht werden.

Vorzugsweise umfasst die Sendevorrichtung eine Sendeantenne und die erste Empfangsvorrichtung eine erste Empfangsantenne, wobei die Sendeantenne bezüglich der Sendevorrichtung und/oder die erste Empfangsantenne bezüglich der ersten Straßenbaumaschine drehbar montiert ist, um die Sendeantenne und die erste Empfangsantenne zueinander auszurichten. Dadurch kann ein besonders einfaches und insbesondere zuverlässiges Übertragen der elektrischen Energie ermöglicht werden. Das Drehen kann ein Kippen umfassen oder darstellen. Zum Drehen der Sendeantenne und/oder der ersten Empfangsantenne kann ein Drehgelenk zwischen der Sendeantenne und der Sendevorrichtung und/oder zwischen der ersten Empfangsantenne und der ersten Straßenbaumaschine vorgesehen sein. Die Sendeantenne und/oder die erste Empfangsantenne kann um wenigstens eine Drehgelenkachse gedreht werden. Die Sendeantenne und/oder die erste Empfangsantenne kann um wenigstens 30°, vorzugsweise um wenigstens 60°, und/oder um höchstens 360°, insbesondere in beiden Richtungen, um die Drehgelenkachse gedreht werden. Die Sendeantenne kann zum Beispiel plattenförmig oder stabförmig sein. Die Sendeantenne kann in einem oberen und/oder seitlichen Bereich der Sendevorrichtung montiert sein. Zum Beispiel kann die Sendeantenne an einem Fahrzeugdach des mobilen Fahrzeugs montiert sein. Insbesondere kann die Sendeantenne zur Umgebung exponiert, d.h. nicht durch Komponenten der Sendevorrichtung und insbesondere des mobilen Fahrzeugs verdeckt, sein. Dadurch können Störungen beim Senden der elektrischen Energie verringert werden. Die Sendeantenne kann kommunikativ mit der Steuerung verbunden sein.

Vorzugsweise beträgt ein Abstand zwischen der Sendevorrichtung insbesondere der Sendeantenne, und der ersten Empfangsvorrichtung, insbesondere der ersten Empfangsantenne, höchstens etwa 1000 m, vorzugsweise höchstens etwa 500 m, vorzugsweise höchstens etwa 100 m, und/oder eine Geschwindigkeit der ersten Straßenbaumaschine relativ zur Sendevorrichtung während des Empfangens elektrischer Energie höchstens etwa 20 m/min, vorzugsweise höchstens etwa 6 m/min. Die Straßenbaumaschine und die Sendevorrichtung können sich insbesondere etwa mit der gleichen, insbesondere konstanten, Geschwindigkeit und/oder in konstantem Abstand zueinander bewegen. Dadurch kann ein zuverlässiges Übertragen der elektrischen Energie ermöglicht werden. Der Abstand zwischen der Sendevorrichtung, insbesondere einer Sendevorrichtungs-Position, und der ersten Empfangsvorrichtung, insbesondere einer ersten Empfangsvorrichtungs-Position, kann eine Übertragungsstrecke angeben. Wenn sich die erste Straßenbaumaschine mit höchstens der oben genannten Geschwindigkeit und höchstens in dem Abstand zu der Sendevorrichtung bewegt, kann erreicht werden, dass sich die erste Stra-βenbaumaschine nicht so weit bzw. schnell von der Sendevorrichtung entfernt, dass die Übertragungsstrecke zu groß für eine Energieübertragung wird. Die Sendevorrichtung kann einen Positionssensor, zum Beispiel GPS-Sensor, umfassen, um die Sendevorrichtungs-Position zu bestimmen. Der Positionssensor kann kommunikativ mit der Steuerung verbunden sein.

Vorzugsweise umfasst das System eine zweite Straßenbaumaschine mit einer zweiten Empfangsvorrichtung zum drahtlosen Empfangen von elektrischer Energie, wobei die erste Straßenbaumaschine eine Energieweiterleitungsvorrichtung zum drahtlosen Weiterleiten der elektrischen Energie von der ersten Empfangsvorrichtung und/oder dem Pufferspeicher an die zweite Straßenbaumaschine aufweist. Dadurch kann die Reichweite und/oder Einsatzdauer der zweiten Straßenbaumaschine und insbesondere deren Ausfallsicherheit erhöht werden. Die zweite Straßenbaumaschine kann im Wesentlichen so oder gleich aufgebaut sein wie die erste Straßenbaumaschine. Die erste Straßenbaumaschine und die zweite Straßenbaumaschine können miteinander, insbesondere drahtlos, kommunikativ verbunden sein. Die erste und/oder die zweite Straßenbaumaschine kann die Energieübertragung initiieren und/oder beenden. Die zweite Empfangsvorrichtung kann dazu ausgebildet sein, elektrische Energie von der Sendevorrichtung und/oder der ersten Straßenbaumaschine zu empfangen. Die zweite Straßenbaumaschine kann eine zweite Empfangs-Positionsüberwachungseinheit zum Überwachen einer zweiten Empfangsvorrichtungs-Position der zweiten Straßenbaumaschine und einer Weiterleitungs-Position der ersten Straßenbaumaschine aufweisen. Die erste Straßenbaumaschine kann eine Weiterleitungs-Positionsüberwachungseinheit zum Überwachen der Weiterleitungs-Position der ersten Straßenbaumaschine und der zweiten Empfangsvorrichtungs-Position der zweiten Straßenbaumaschine aufweisen. Die zweite Empfangs-Positionsüberwachungseinheit kann einen Positionssensor, zum Beispiel GPS-Sensor, umfassen, um die zweite Empfangsvorrichtungs-Position zu bestimmen. Die Weiterleitungs-Positionsüberwachungseinheit kann einen Positionssensor, zum Beispiel GPS-Sensor, umfassen, um die Weiterleitungs-Position zu bestimmen. Die zweite Straßenbaumaschine und/oder die erste Straßenbaumaschine kann dazu ausgebildet sein, eine zweite Übertragungsstrecke zum drahtlosen Übertragen von elektrischer Energie zu bestimmen. Die zweite Übertragungsstrecke kann ein Abstand zwischen der Weiterleitungs-Position und der zweiten Empfangsvorrichtungs-Position sein. Die Straßenbaumaschine kann unter der Bedingung Energie an die zweite Straßenbaumaschine übertragen, dass eine zweite Übertragungsstrecke zwischen der Straßenbaumaschine und der zweiten Straßenbaumaschine höchstens einer zweiten maximalen Übertragungsstrecke entspricht. Die zweite maximale Übertragungsstrecke kann höchstens etwa 200 m, vorzugsweise höchstens etwa 50 m, betragen. Für die Energieübertragung kann es insbesondere von Vorteil sein, dass sich die erste Straßenbaumaschine und die zweite Straßenbaumaschine nicht zu schnell voneinander entfernen. Die Geschwindigkeit der ersten Straßenbaumaschine relativ zur zweiten Straßenbaumaschine kann höchstens etwa 150 m/min, vorzugsweise höchstens etwa 6 m/min betragen. Die erste Straßenbaumaschine und die zweite Straßenbaumaschine können sich insbesondere etwa mit der gleichen, insbesondere konstanten, Geschwindigkeit und/oder in konstantem Abstand zueinander bewegen. Optional kann die Straßenbaumaschine unter der Bedingung Energie an die zweite Straßenbaumaschine übertragen, dass der Ladestand des Pufferspeichers der Straßenbaumaschine mindestens etwa 70 %, vorzugsweise mindestens etwa 80%, des maximalen Ladestands beträgt. Die Energieübertragung von der ersten Straßenbaumaschine an die zweite Straßenbaumaschine kann insbesondere dann von Vorteil sein, wenn die zweite Straßenbaumaschine nicht in Reichweite einer Sendevorrichtung ist, d.h. nicht von dieser mit Energie versorgt werden kann. In diesem Fall kann die erste Straßenbaumaschine die zweite Straßenbaumaschine mit elektrischer Energie versorgen, bis die zweite Straßenbaumaschine wieder in Reichweite einer Sendevorrichtung ist.

Gemäß einem weiteren Aspekt der Erfindung wird ein Verfahren zum Betreiben einer Stra-βenbaumaschine bereitgestellt. Das Verfahren umfasst die Schritte: Versorgen einer außerhalb der Straßenbaumaschine angeordneten, externen Sendevorrichtung mit elektrischer Energie mittels einer Energiequelle; Drahtloses Übertragen der elektrischen Energie von der Sendevorrichtung an eine Empfangsvorrichtung der Straßenbaumaschine; Weiterleiten der elektrischen Energie von der Empfangsvorrichtung an einen Elektroantrieb und/oder zumindest einen elektrischen Verbraucher der Straßenbaumaschine; und Bewegen der Straßenbaumaschine mittels des Elektroantriebs und/oder Betreiben des elektrischen Verbrauchers mittels der elektrischen Energie.

Vorzugsweise umfasst die Straßenbaumaschine einen Pufferspeicher zum Speichern von elektrischer Energie, wobei die Empfangsvorrichtung die elektrische Energie an den Pufferspeicher weiterleitet, wobei der Pufferspeicher die elektrische Energie an den Elektroantrieb und/oder den elektrischen Verbraucher weiterleitet.

Die zu einem der Aspekte der Erfindung (Straßenbaumaschine, System oder Verfahren) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine perspektivische Ansicht einer Straßenbaumaschine in Form eines Straßenfertigers gemäß einer Ausführungsform;
- Figur 2: eine perspektivische Ansicht einer Straßenbaumaschine in Form eines Beschickerfahrzeugs gemäß einer Ausführungsform;
- Figur 3: ein erstes System zum drahtlosen Versorgen eines Straßenfertigers mit elektrischer Energie gemäß einer Ausführungsform;
- Figur 4: das erste System zu einem ersten Zeitpunkt der Einbaufahrt;
- Figur 5: das erste System zu einem zweiten Zeitpunkt der Einbaufahrt;
- Figur 6: das erste System zu einem dritten Zeitpunkt der Einbaufahrt;
- Figur 7: ein zweites System zum drahtlosen Versorgen eines Straßenfertigers und eines Beschickerfahrzeugs mit elektrischer Energie gemäß einer weiteren Ausführungsform;
- Figur 8: das zweite System zu einem ersten Zeitpunkt der Einbaufahrt; und
- Figur 9: das zweite System zu einem zweiten Zeitpunkt der Einbaufahrt.

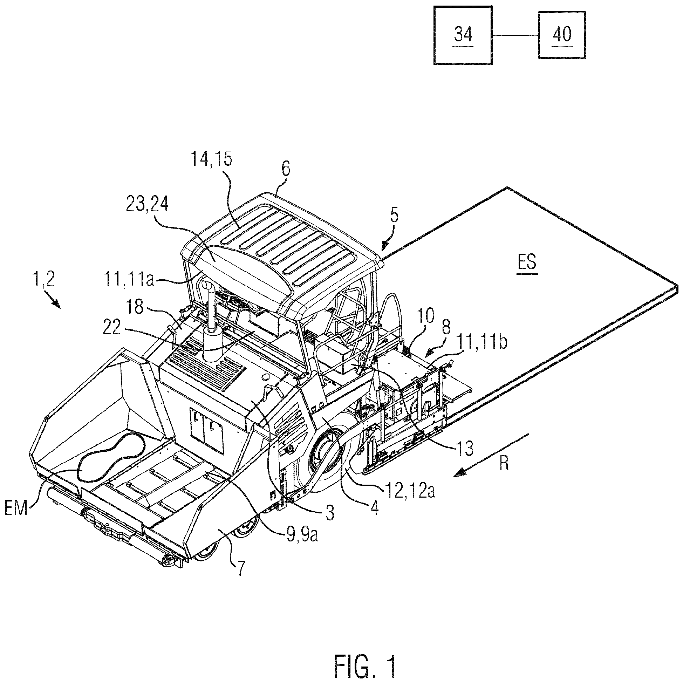

Die Figur 1 zeigt eine perspektivische Ansicht einer Straßenbaumaschine 1 in Form eines Straßenfertigers 2 gemäß einer Ausführungsform. Der Straßenfertiger 2 ist zur Herstellung einer Einbauschicht ES aus Einbaumaterial (z.B. Asphaltmischgut) EM ausgebildet. Der Straßenfertiger 2 ist selbstfahrend, in einer Fahrtrichtung R.

Der Straßenfertiger 2 weist des Weiteren ein Chassis 4, einen Bedienstand 5 für einen Bediener des Straßenfertigers 2, ein Fahrerdach 6 sowie einen Materialbunker 7 zur Aufnahme des Einbaumaterials EM auf. Ferner sind an dem Chassis 4 eine höhenverstellbar gelagerte und in Fahrtrichtung R geschleppte Einbaubohle 8 und eine Fördereinheit 9 umfassend ein Förderband 9a angebracht, um das Einbaumaterial EM aus dem Materialbunker 7 des Straßenfertigers 2 der Einbaubohle 8 mittels einer Querverteilervorrichtung 10 der Straßenbaumaschine 1 zur Verfügung zu stellen.

Figur 1 zeigt ferner beispielhaft zwei elektrische Verbraucher 11 des Straßenfertigers 2. Ein erster elektrischer Verbraucher 11a ist eine Beleuchtung zum Beleuchten der Umgebung oder des Bedienstands 5. Ein zweiter elektrischer Verbraucher 11b ist eine Heizvorrichtung zum Heizen der Einbaubohle 8. Die Einbaubohle 8 umfasst Komponenten wie z.B. Verdichtungsaggregate (Glättbleche, Tamper und Pressleisten (nicht gezeigt). Durch die Einwirkung des Eigengewichts des Verdichtungsaggregats wird das Einbaumaterial EM verdichtet. Um zu verhindern, dass das Einbaumaterial EM an den Komponenten der Einbaubohle 8 festklebt, können in diese Komponenten Heizeinrichtungen (nicht gezeigt) integriert werden, in der Regel elektrische Heizeinrichtungen.

Um sich in der Richtung R fortzubewegen, weist der Straßenfertiger 2 ein Radfahrwerk 12 mit zwei angetriebenen Rädern 12a auf. Der Straßenfertiger 2 weist ferner einen Elektroantrieb 3 auf, um das Radfahrwerk 12 anzutreiben. Mit dem Elektroantrieb 3 kann der Straßenfertiger 2 betrieben werden, ohne direkt Schadstoffe auszustoßen. Im Idealfall kann der Straßenfertiger 2 geräuscharm betrieben werden. Dies ist insbesondere von Vorteil, wenn der Straßenfertiger 2 nur ein begrenztes Maß an Geräuschen oder Schadstoffen emittieren darf, zum Beispiel, wenn er in oder in der Nähe einer Ortschaft betrieben werden soll. Der Elektroantrieb 3 ist dazu ausgebildet, das Radfahrwerk 12 derart anzutreiben, dass das Radfahrwerk 12 den Straßenfertiger 2 in der Fahrtrichtung R bewegt. Dazu sind der Elektroantrieb 3 und das Radfahrwerk 12 mechanisch miteinander verbunden.

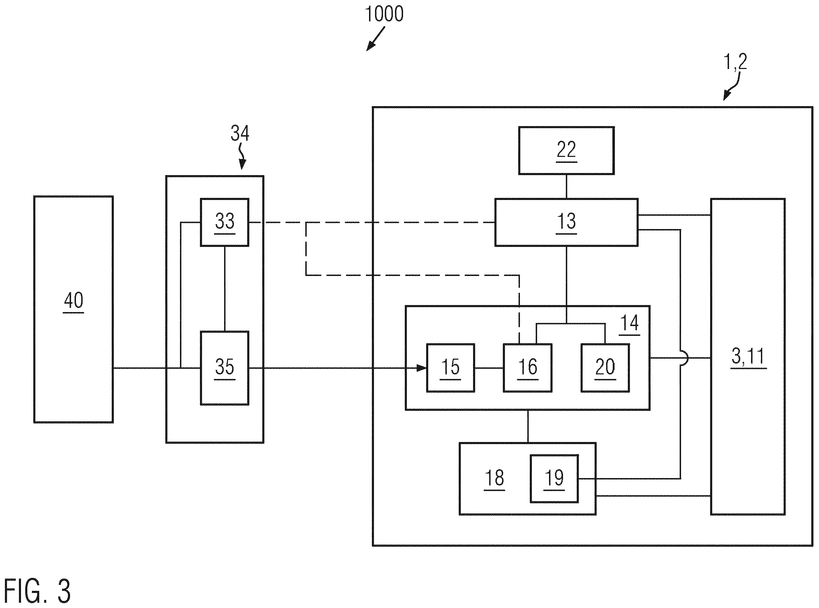

Zur Versorgung des Elektroantriebs 3 und der Verbraucher 11 mit elektrischer Energie weist der Straßenfertiger 2 eine erste Empfangsvorrichtung 14 sowie einen Pufferspeicher 18 auf (siehe Figur 3). Ferner umfasst der Straßenfertiger 2 eine erste Steuerungsvorrichtung 13 zur Steuerung des Straßenfertigers 2 sowie eine erste Anzeigevorrichtung 22. Das Radfahrwerk 12, der Elektroantrieb 3, die Verbraucher 11, die erste Empfangsvorrichtung 14, der Pufferspeicher 18, die erste Steuerungsvorrichtung 13 und die erste Anzeigevorrichtung 22 sind miteinander über ein Kabel kommunikativ verbunden.

Im Folgenden werden die Versorgung des Straßenfertigers 2 mit elektrischer Energie sowie die Funktion der vorgehend genannten Komponenten anhand eines in Figur 3 dargestellten ersten Systems 1000 beschrieben.

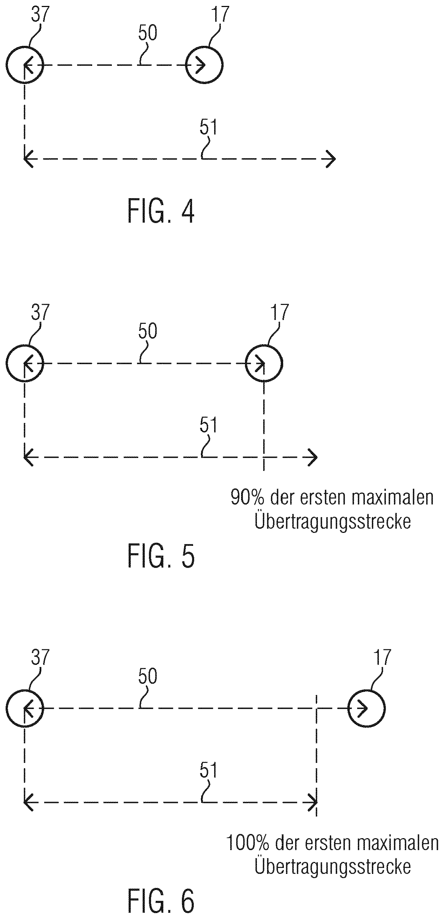

Das erste System 1000 umfasst den Straßenfertiger 2, eine externe Sendevorrichtung 34 und eine Energiequelle 40. Eine drahtlose Verbindung zwischen einer oder mehreren Komponenten des Systems ist, ebenso in den Figuren 4 bis 9, gestrichelt dargestellt. Eine kabelgebundene Verbindung ist, ebenso in den Figuren 4 bis 9, als durchgezogene Linie dargestellt. Ein Pfeil gibt, ebenso in den Figuren 4 bis 9, eine Übertragungsrichtung an, wobei eine Verbindung ohne Pfeil eine Übertragung in beide Richtungen erlaubt.

Während einer Einbaufahrt an einer Baustelle empfängt der Straßenfertiger 2 mittels der ersten Empfangsvorrichtung 14 von einer Sendeantenne 35 der Sendevorrichtung 34 drahtlos elektrische Energie. Durch die drahtlose Energieübertragung wird der Straßenfertiger 2 besonders einfach mit elektrischer Energie versorgt. Es wird ferner eine Verlängerung der Einsatzzeit und Reichweite des Straßenfertigers 2 erreicht. Im Idealfall wird vermieden, die Einbaufahrt des Straßenfertigers 2 aufgrund von Energiemangel zu stoppen. Dies verbessert im Idealfall eine Einbauqualität der Einbauschicht ES.

Zum Empfangen der elektrischen Energie weist die erste Empfangsvorrichtung 14 eine erste plattenförmige Empfangsantenne 15 mit einer Fläche zum Empfangen von elektrischer Energie von etwa 1,5 m² auf. Die erste Empfangsantenne 15 ist am Fahrerdach 6 zur Umgebung exponiert montiert, d.h. die erste Empfangsantenne 15 wird nicht durch Komponenten des Stra-ßenfertigers 2 verdeckt (siehe Figur 1). Dadurch wird ein besonders einfaches und zuverlässiges Empfangen der elektrischen Energie ermöglicht. Es werden Störungen beim Empfangen der elektrischen Energie verringert und dadurch die Energieübertragung verbessert.

Die Energiequelle 40 versorgt die Sendevorrichtung 34 mit der zu übertragenden elektrischen Energie. Dazu ist die Energiequelle 40 als lokales Energieverteilungsnetz ausgebildet und mit der Sendevorrichtung 34 über ein Kabel elektrisch und kommunikativ verbunden.

Die erste Steuerungsvorrichtung 13 steuert die Energieübertragung von der Sendevorrichtung 34 an den Straßenfertiger 2. Damit Energie von der Sendevorrichtung 34 an den Straßenfertiger 2 zu übertragen, ist es erforderlich, dass diese nicht zu weit voneinander entfernt sind. Um zu bestimmen, ob eine Energieübertragung möglich ist, bestimmt eine erste Empfangs-Positionsüberwachungseinheit 16 der Empfangsvorrichtung 14 mittels eines integrierten GPS-Sensors eine erste Empfangsvorrichtungs-Position 17 der ersten Empfangsvorrichtung 14. Die Sendevorrichtung 34 bestimmt mittels eines GPS-Sensors eine Sendevorrichtungs-Position 37 der Sendevorrichtung 34 und leitet diese mittels einer Steuerung 33 an die erste Empfangs-Positionsüberwachungseinheit 16 weiter. Basierend auf der Sendevorrichtungs-Position 37 und der ersten Empfangsvorrichtungs-Position 17 bestimmt die erste Empfangs-Positionsüberwachungseinheit 16 eine erste Übertragungsstrecke 50 zwischen der Sendevorrichtungs-Position 37 und der ersten Empfangsvorrichtungs-Position 17 (siehe Figur 4). Im vorliegenden Ausführungsbeispiel beträgt die erste Übertragungsstrecke 50 etwa 300 m. Die erste Empfangs-Positionsüberwachungseinheit 16 vergleicht die erste Übertragungsstrecke 50 mit einer gespeicherten ersten maximalen Übertragungsstrecke 51 von etwa 500 m bis zu der Energie übertragen werden kann. Im vorliegenden Fall ist die erste Übertragungsstrecke 50 kleiner als die erste maximale Übertragungsstrecke 51. Die erste Empfangs-Positionsüberwachungseinheit 16 leitet diese Information an die erste Steuerungsvorrichtung 13 weiter.

Ferner kann elektrische Energie übertragen werden, wenn sich in der ersten Übertragungsstrecke 50 kein Objekt 21 befindet. Dies wird mittels eines ersten Objektdetektors 20 der Empfangsvorrichtung 14, der einen Radarsensor umfasst, bestimmt. Im vorliegenden Fall wird kein Objekt 21 detektiert. Der Objektdetektor 20 leitet eine Information darüber, dass kein Objekt 21 detektiert wurde über ein Kabel an die erste Steuerungsvorrichtung 13 weiter.

Ferner empfängt die erste Steuerungsvorrichtung 13 von dem Elektroantrieb 3 und den Verbrauchern 11 Informationen über deren Energiebedarf während der Einbaufahrt.

Basierend auf der ersten Übertragungsstrecke 50, der Information über das nichtdetektierten Objekt 21 und dem Energiebedarf initiiert die erste Steuerungsvorrichtung 13 die Energieübertragung von der Sendevorrichtung 34 an die erste Empfangsvorrichtung 14. Dazu kommuniziert die erste Steuerungsvorrichtung 13 drahtlos mit einer Steuerung 33 der Sendevorrichtung 34, woraufhin diese die Sendeantenne 35 dazu veranlasst, elektrische Energie an die Empfangsantenne 15 des Straßenfertigers 2 zu senden. Die Energie wird in Form von mehreren gebündelten elektrischen Signalen mit einer Frequenz von etwa 2,5 GHz und einer Leistung von etwa 150 kW übertragen. Dies ermöglicht eine zielgerichtete und ausreichende Versorgung des Straßenfertigers 2 mit elektrischer Energie, insbesondere ohne große Übertragungsverluste. Die empfangene Energie leitet die erste Empfangsvorrichtung 14 über ein Kabel unmittelbar an den Elektroantrieb 3 und die Verbrauchern 11 weiter, um diese zu betreiben.

Im ersten System 1000 ist die Sendevorrichtung 34 im Gegensatz zum bewegten Straßenfertiger 2 stationär an der Baustelle vorgesehen. Das heißt, der Straßenfertiger 2 entfernt sich von der Sendevorrichtung 34, insbesondere mit einer Geschwindigkeit von etwa 6 m/min. Daher wird die erste Übertragungsstrecke 50 mit zunehmender Einbaufahrt des Straßenfertigers 2 umso größer (siehe Figuren 5 bis 6). Wenn die erste Übertragungsstrecke 50 die erste maximale Übertragungsstrecke 51 überschreitet, wäre der Straßenfertiger 2 für eine Energieübertragung zu weit von der ersten Sendevorrichtung 34 entfernt, sodass der Straßenfertiger 2 keine Energie mehr empfangen kann. Um zu vermeiden, dass der Straßenfertiger 2 die Einbaufahrt unterbrechen oder beenden muss, ist die erste Empfangsvorrichtung 14 dazu ausgebildet, einen Teil der von der Sendevorrichtung 34 empfangenen elektrischen Energie an den als Superkondensator ausgebildeten Pufferspeicher 18 weiter, sodass dieser den Straßenfertiger 2 mittelbar mit Energie versorgen kann. Der Pufferspeicher 18 wird unter den Bedingungen über die Empfangsvorrichtung 14 geladen, dass die erste Übertragungsstrecke 50 mindestens 90% der ersten maximalen Übertragungsstrecke 51 und der Ladestand des Pufferspeichers 18 kleiner als der maximale Ladestand von 100% ist.

Für den in Figur 5 gezeigten zweiten Zeitpunkt der Einbaufahrt bestimmt die erste Empfangs-Positionsüberwachungseinheit 16 eine erste Übertragungsstrecke 50 etwa 450 m. Dies entspricht 90% der ersten maximalen Übertragungsstrecke 51. Ein Batteriemanagementsystem 19 des Pufferspeichers 18 bestimmt einen Ladestand von etwa 50%. Basierend auf diesen Informationen veranlasst die erste Steuerungsvorrichtung 13 die erste Empfangsvorrichtung 14 dazu, elektrische Energie, sozusagen vorsorglich, an den Pufferspeicher 18 über ein Kabel weiterzuleiten. Zum Laden des Pufferspeichers 18 kommuniziert die Steuerungsvorrichtung 13 mit dem Batteriemanagementsystem 19. Das Batteriemanagementsystem 19 steuert das Laden und Entladen des Pufferspeichers 18 derart, dass Schäden am Pufferspeicher 18 vermieden und seine Langlebigkeit erhöht werden.

In Figur 6 ist die erste Übertragungsstrecke 50 größer als die erste maximale Übertragungsstrecke 51, d.h., der Straßenfertiger 2 ist für die Energieübertragung zu weit von der Sendevorrichtung 34 entfernt. Zu diesem dritten Zeitpunkt der Einbaufahrt überträgt der Pufferspeicher 18 über ein Kabel die gespeicherte elektrische Energie an den Elektroantrieb 3 und die Verbraucher 11, sodass der Straßenfertiger 2 seine Einbaufahrt fortsetzen und insbesondere beenden kann.

Während der Einbaufahrt informiert die erste Anzeigevorrichtung 22 den Bediener visuell über den Betrieb des Straßenfertigers 2 (siehe Figur 1). Dazu ist die Anzeigevorrichtung 22 als Display ausgebildet. Die Anzeigevorrichtung 22 informiert darüber, wenn der Straßenfertiger 2 unmittelbar durch die erste Empfangsvorrichtung 14, wie in Figur 4, und/oder mittelbar über den Pufferspeicher 18 mit Energie versorgt wird, wie in Figur 6. Sollte die unmittelbare Energieversorgung des Straßenfertigers 2 durch die erste Empfangsvorrichtung 14 bedroht sein und insbesondere der Pufferspeicher 18 vorsorglich aufgeladen werden, wie in Figur 5, kann der Bediener dies ebenso frühzeitig aus der Anzeigevorrichtung 22 entnehmen.

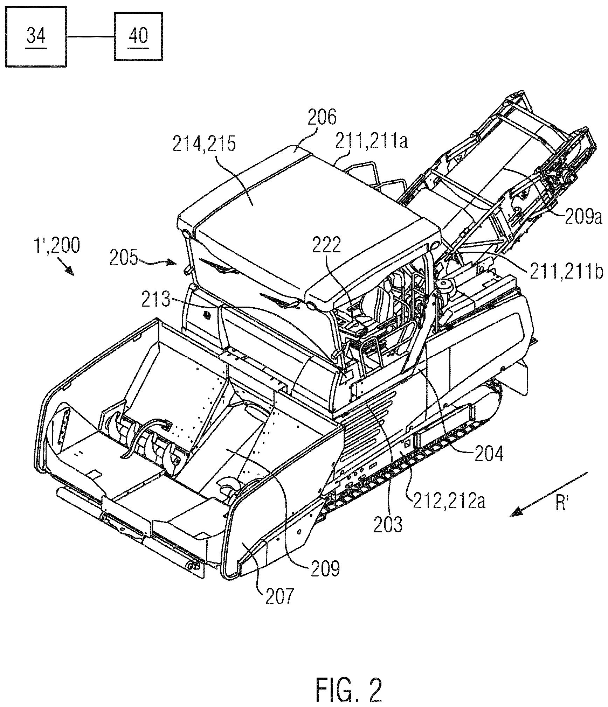

Die Figur 2 zeigt in perspektivischer Ansicht eine zweite Straßenbaumaschine 1', bei der es sich um ein Beschickerfahrzeug 200 zum Fördern von Einbaumaterial EM zu einem hinterherfahrenden Straßenfertiger 2 handelt. Das Beschickerfahrzeug 200 ist selbstfahrend, in einer Fahrtrichtung R'.

Das Beschickerfahrzeug 200 umfasst ein Chassis 204, einen Bedienstand 205, ein Fahrerdach 206, einen Materialbunker 207 zur Aufnahme eines Einbaumaterials EM sowie eine Fördereinheit 209 umfassend ein Förderband 209a, um das Einbaumaterial EM aus dem Materialbunker 207 des Beschickerfahrzeugs 200 in den Materialbunker 7 des Straßenfertigers 2 zu transportieren.

Das Beschickerfahrzeug 200 verfügt des Weiteren über zwei elektrische Verbraucher 211. Ein erster elektrischer Verbraucher 211a ist eine Beleuchtung zum Beleuchten der Umgebung oder den Bedienstand 205. Ein zweiter elektrischer Verbraucher 211b ist eine Heizvorrichtung zum Heizen des Förderbands 209a.

Das Beschickerfahrzeug 200 wird mittels eines Raupenfahrwerk 212 mit zwei angetriebenen Ketten 212a bewegt. Ein Verbrennungsantrieb 203 ist hydromechanisch mit dem Raupenfahrwerk 212 verbunden, um dieses anzutreiben. Der Verbrennungsantrieb 203 ermöglicht einen im Vergleich zu einem Betrieb mit einem Elektroantrieb relativ günstigen Betrieb des Beschickerfahrzeugs 200 mit hoher Reichweite. Dies ist insbesondere von Vorteil, wenn es keine Anforderungen an Geräusch- oder Schadstoffbegrenzungen gibt oder, wenn das Beschickerfahrzeug 200 über weite Strecken ohne Unterbrechung betrieben werden soll.

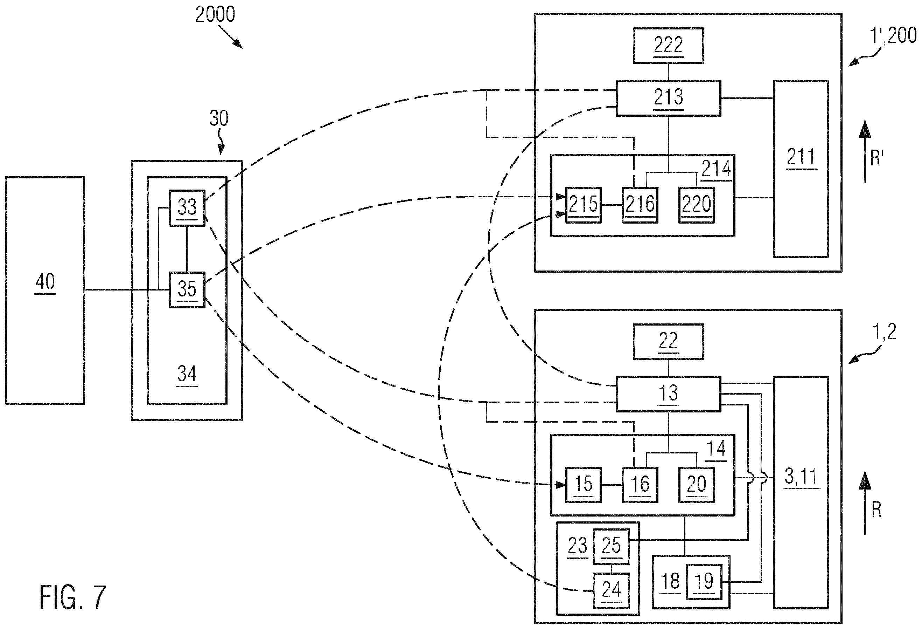

Das Beschickerfahrzeug 200 weist ferner eine zweite Empfangsvorrichtung 214 auf, die im Wesentlichen gleich aufgebaut ist wie die erste Empfangsvorrichtung 14. Zum Beispiel weist die zweite Empfangsvorrichtung 214 eine zweite Empfangsantenne 215, eine zweite Empfangs-Positionsüberwachungseinheit 216 und einen zweiten Objektdetektor 220 auf (siehe Figur 7). Im Gegensatz zum Straßenfertiger 2 versorgt die zweite Empfangsvorrichtung 214 nur die Verbraucher 211 mit elektrischer Energie. Auch weist das Beschickerfahrzeug 200 keinen Pufferspeicher 18 auf, wodurch es möglich ist, den freien Bauraum für einen vergrößerten Verbrennungsantrieb 203 zu nutzen. Dadurch wird die Einsatzzeit und Reichweite des Beschickerfahrzeugs 200 weiter erhöht.

Ferner umfasst das Beschickerfahrzeugs 200 eine zweite Steuerungsvorrichtung 213 zur Steuerung des Beschickerfahrzeugs 200 und eine zweite Anzeigevorrichtung 222, die je im Wesentlichen gleich aufgebaut sind wie beim Straßenfertiger 2. Die Verbraucher 211, die zweite Empfangsvorrichtung 214, die zweite Steuerungsvorrichtung 213 und die zweite Anzeigevorrichtung 222 sind miteinander über ein Kabel kommunikativ verbunden.

Die Figuren 7 bis 9 zeigen ein zweites System 2000 zum drahtlosen Versorgen eines Stra-ßenfertigers 2 und eines Beschickerfahrzeugs 200 mit elektrischer Energie. Das zweite System 2000 umfasst einen Straßenfertiger 2, ein Beschickerfahrzeug 200, eine Sendevorrichtung 34 und eine Energiequelle 40. Die Energiequelle 40 und das Beschickerfahrzeug 200 entsprechen der vorgehend beschriebenen Energiequelle 40 und dem Beschickerfahrzeug 200.

Die Sendevorrichtung 34 entspricht der vorgehend genannten Sendevorrichtung 34, ist jedoch mobil ausgebildet. Dazu ist die Sendevorrichtung 34 an einem mobilen Fahrzeug 30 montiert. Für eine zuverlässige Energieübertragung ist die Sendeantenne 35 der Sendevorrichtung 34 an einem Fahrzeugdach des mobilen Fahrzeugs 30 montiert. Während sich der Straßenfertiger 2 und das Beschickerfahrzeug 200 bewegen, bewegt sich auch das mobile Fahrzeug 30 relativ dazu, insbesondere mit diesen in der Fahrtrichtung R, R' mit.

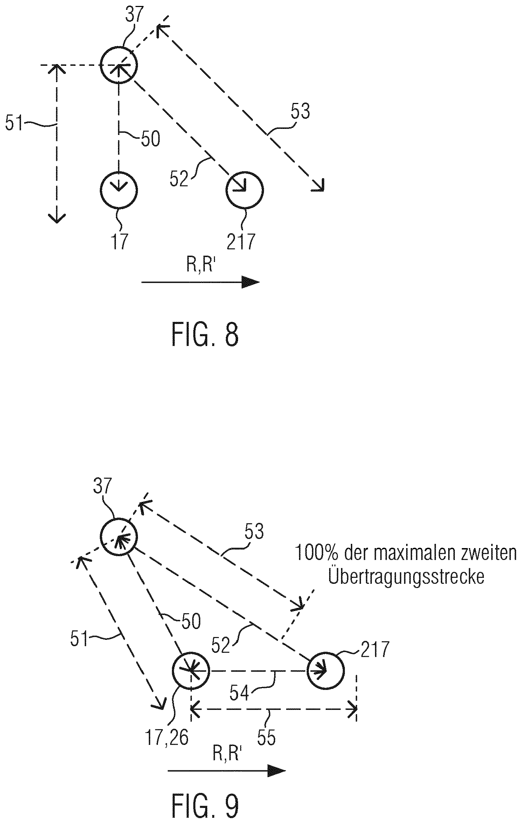

Der Straßenfertiger 2 und das Beschickerfahrzeug 200 bewegen sich je relativ zu dem mobilen Fahrzeug 30 mit einer konstanten Geschwindigkeit von etwa 4 m/min. Daher wird die erste Übertragungsstrecke 50 zwischen dem Straßenfertiger 2, insbesondere der ersten Empfangsvorrichtungs-Position 17, und der Sendevorrichtung 34, insbesondere der Sendevorrichtungs-Position 37, sowie eine zweite Übertragungsstrecke 52 zwischen dem Beschickerfahrzeug 200, insbesondere einer zweiten Empfangsvorrichtungs-Position 217, und der Sendevorrichtung 34, insbesondere der Sendevorrichtungs-Position 37, mit zunehmender Fahrt größer (siehe Figuren 8 und 9). Indem die Sendevorrichtung 34 mobil ist, wird erreicht, dass sich der Straßenfertiger 2 und das Beschickerfahrzeug 200 jedoch langsamer von ihr entfernen als von einer stationären Sendevorrichtung 34. Dadurch ist es möglich, den Straßenfertiger 2 und das Beschickerfahrzeug 200 länger drahtlos mit Energie zu versorgen, insbesondere solange die erste Übertragungsstrecke 50 und/oder die zweite Übertragungsstrecke 52 höchstens der ersten maximalen Übertragungsstrecke 51 bzw. der zweiten maximalen Übertragungsstrecke 53 entspricht. Die zweite maximale Übertragungsstrecke 53 entspricht im vorliegenden Ausführungsbeispiel der ersten maximalen Übertragungsstrecke 51 von etwa 500 m.

Die Figur 8 zeigt den Straßenfertiger 2, das Beschickerfahrzeug 200 und die Sendevorrichtung 34 zu einem ersten Zeitpunkt der Einbaufahrt. Die erste bzw. zweite Übertragungsstrecke 50, 52 sind kleiner als die erste bzw. zweite maximale Übertragungsstrecke 51, 53, sodass die Sendevorrichtung 34 drahtlos Energie an den Straßenfertiger 2 und das Beschickerfahrzeug 200 überträgt. Zu diesem Zeitpunkt versorgt der Straßenfertiger 2 den Elektroantrieb 3 und die Verbraucher 11 ebenso wie das Beschickerfahrzeug 200 die Verbraucher 211 unmittelbar mit elektrischer Energie.

Die Figur 9 zeigt den Straßenfertiger 2, das Beschickerfahrzeug 200 und die Sendevorrichtung 34 zu einem zweiten Zeitpunkt der Einbaufahrt. Die erste Übertragungsstrecke 50 zwischen dem Straßenfertiger 2 und der Sendevorrichtung 34 ist für die Energieübertragung noch klein genug. Das heißt, die erste Empfangsvorrichtung 14 empfängt drahtlose Energie von der Sendevorrichtung 34 und der Straßenfertiger 2 versorgt den Elektroantrieb 3 und die Verbraucher 11 unmittelbar mit elektrischer Energie.

Hingegen ist die zweite Übertragungsstrecke 52 zwischen dem Beschickerfahrzeug 200 und der Sendevorrichtung 34 zu groß für die Energieübertragung. Jedoch weist das Beschickerfahrzeug 200 keinen Pufferspeicher 18 auf (siehe Figur 7). Das heißt, das Beschickerfahrzeug 200, insbesondere die Verbraucher 211, kann nur über die zweite Empfangsvorrichtung 214 unmittelbar mit Energie versorgt werden. Damit das Beschickerfahrzeug 200 seine Einbaufahrt dennoch fortsetzen kann, ist das Beschickerfahrzeug 200 dazu ausgebildet, drahtlos Energie von dem hinterherfahrenden Straßenfertiger 2 zu empfangen. Dazu weist der Straßenfertiger 2 eine Energieweiterleitungsvorrichtung 23 mit einer plattenförmigen Weiterleitungsantenne 24 auf (siehe Figur 7). Die Weiterleitungsantenne 24 ist exponiert zur Umgebung an einer Vorderseite des Fahrerdachs 6 des Straßenfertigers 2 in Richtung der zweiten Empfangsvorrichtung 214 des vorausfahrenden Beschickerfahrzeugs 200 montiert (siehe Figur 1) und über ein Kabel mit dem Pufferspeicher 18 verbunden, um von diesem die zu übertragende elektrische Energie zu beziehen.

Zu dem in Figur 9 gezeigten Zeitpunkt initiiert die zweite Steuerungsvorrichtung 213 des Beschickerfahrzeugs 200 die drahtlose Energieübertragung von dem Straßenfertiger 2 an das Beschickerfahrzeug 200 unter den Bedingungen, dass eine dritte Übertragungsstrecke 54 zwischen dem Straßenfertiger 2 und dem Beschickerfahrzeug 200 höchstens einer dritten maximalen Übertragungsstrecke 55 von 100 m entspricht und der Ladestand des Pufferspeichers 18 des Straßenfertigers 2 mindestens 80 % des maximalen Ladestands beträgt.

Um die dritte Übertragungsstrecke 54 zu bestimmen, weist die Energieweiterleitungsvorrichtung 23 eine Weiterleitungs-Positionsüberwachungseinheit 25 auf (siehe Figur 7). Diese bestimmt mittels eines integrierten GPS-Sensors eine Weiterleitungs-Position 26, die etwa der ersten Empfangsvorrichtungs-Position 17 entspricht (siehe Figur 9). Der Straßenfertiger 2 sendet die Weiterleitungsposition 26 an die zweite Empfangs-Positionsüberwachungseinheit 216 des Beschickerfahrzeugs 200. Die zweite Empfangs-Positionsüberwachungseinheit 216 weist ebenfalls einen GPS-Sensor auf, und bestimmt mit diesem eine zweite Empfangsvorrichtungs-Position 217 der zweiten Empfangsvorrichtung 214. Basierend auf der Weiterleitungsposition 26 und der zweiten Empfangsvorrichtungs-Position 217 bestimmt die zweite Empfangs-Positionsüberwachungseinheit 216 die dritte Übertragungsstrecke 54 von 20 m, die somit kleiner ist als die dritte maximale Übertragungsstrecke 55. Die zweite Empfangs-Positionsüberwachungseinheit 216 leitet diese Information an die zweite Steuerungsvorrichtung 213 weiter. Ferner leitet die erste Steuerungsvorrichtung 13 eine Information über den Ladestand des Pufferspeichers 18 des Straßenfertigers 2 von 100% an die zweite Steuerungsvorrichtung 213 weiter. Ferner empfängt die zweite Steuerungsvorrichtung 213 von den Verbrauchern 211 Informationen über deren Energiebedarf während der Einbaufahrt. Basierend auf der dritten Übertragungsstrecke 54, dem Ladestand des Pufferspeichers 18 und dem Energiebedarf initiiert die zweite Steuerungsvorrichtung 213 die Energieübertragung von dem Straßenfertiger 2 an das Beschickerfahrzeug 200. Dazu kommuniziert die zweite Steuerungsvorrichtung 213 des Beschickerfahrzeugs 200 drahtlos mit der ersten Steuerungsvorrichtung 13 des Straßenfertigers 2. Der Straßenfertiger 2 überträgt mittels der Weiterleitungsantenne 24 so lange und so viel elektrische Energie an das Beschickerfahrzeug 200, dass dieser zusammen mit dem Straßenfertiger 2 seine Einbaufahrt fortsetzen und insbesondere beenden kann.

## Patentansprüche

1. Straßenbaumaschine (1), wobei die Straßenbaumaschine (1) ein Straßenfertiger (2) zum Herstellen einer Einbauschicht (ES) aus einem Einbaumaterial (EM) oder ein Beschickerfahrzeug (200) zum Beliefern des Straßenfertigers (2) mit Einbaumaterial (EM) ist, die Straßenbaumaschine (1) umfassend:
einen Elektroantrieb (3) zum Antreiben der Straßenbaumaschine (1) und/oder zumindest einen elektrischen Verbraucher (11, 211), und
eine Empfangsvorrichtung (14, 214) für elektrische Energie, wobei die Empfangsvorrichtung (14, 214) zum drahtlosen Empfangen von elektrischer Energie von einer externen Sendevorrichtung (34) und zum Weiterleiten der elektrischen Energie an den Elektroantrieb (3) und/oder den elektrischen Verbraucher (11, 211) ausgebildet ist.

2. Straßenbaumaschine nach Anspruch 1, wobei die Empfangsvorrichtung (14, 214) eine, insbesondere plattenförmige, Empfangsantenne (15, 215) aufweist.

3. Straßenbaumaschine nach Anspruch 1 oder 2, wobei die drahtlos übertragene elektrische Energie mehrere gebündelte, insbesondere hochfrequente, elektrische Signale umfasst.

4. Straßenbaumaschine nach einem der vorangehenden Ansprüche, wobei die Empfangsvorrichtung (14, 214) dazu ausgebildet ist, während einer Einbaufahrt der Straßenbaumaschine (1) drahtlos elektrische Energie zu empfangen.

5. Straßenbaumaschine nach einem der vorangehenden Ansprüche, **gekennzeichnet durch** zumindest einen wieder aufladbaren Pufferspeicher (18), wobei der Pufferspeicher (18) zum Empfangen und Speichern elektrischer Energie von der Empfangsvorrichtung (14, 214) und zum Versorgen des Elektroantriebs (3) und/oder des elektrischen Verbrauchers (11, 211) mit elektrischer Energie ausgebildet ist.

6. Straßenbaumaschine nach einem der vorangehenden Ansprüche, **gekennzeichnet durch** eine Empfangs-Positionsüberwachungseinheit (16, 216) zum Überwachen einer Empfangsvorrichtungs-Position (17, 217) und einer Sendevorrichtungs-Position (37),
insbesondere wobei die Straßenbaumaschine (1) dazu ausgebildet ist, eine Übertragungsstrecke (50, 52) zum drahtlosen Übertragen von elektrischer Energie zwischen der Sendevorrichtungs-Position (37) und der Empfangsvorrichtungs-Position (17, 217) zu bestimmen.

7. Straßenbaumaschine nach Anspruch 6, **gekennzeichnet durch** einen Objektdetektor (20, 220) zum Detektieren von einem Objekt (21) in der Übertragungsstrecke (50, 52).

8. Straßenbaumaschine nach einem der vorangehenden Ansprüche, **gekennzeichnet durch** eine Energieweiterleitungsvorrichtung (23) zum drahtlosen Weiterleiten der elektrischen Energie von der Empfangsvorrichtung (14, 214) und/oder dem Pufferspeicher (18) an eine zweite Straßenbaumaschine (1').

9. System (1000, 2000) zum drahtlosen Versorgen einer ersten Straßenbaumaschine (1) mit elektrischer Energie, umfassend:
eine erste Straßenbaumaschine (1) mit einer ersten Empfangsvorrichtung (14) zum drahtlosen Empfangen von elektrischer Energie,
eine externe Sendevorrichtung (34) zum drahtlosen Senden von elektrischer Energie an die erste Empfangsvorrichtung (14), und
eine Energiequelle (40) zum Versorgen der Sendevorrichtung (34) mit elektrischer Energie.

10. System nach Anspruch 9, wobei die Sendevorrichtung (34) stationär oder mobil ist.

11. System nach Anspruch 9 oder 10, wobei die Sendevorrichtung (34) eine Sendeantenne (35) und die erste Empfangsvorrichtung (14) eine erste Empfangsantenne (15) aufweist, wobei die Sendeantenne (35) bezüglich der Sendevorrichtung (34) und/oder die erste Empfangsantenne (15) bezüglich der ersten Straßenbaumaschine (1) drehbar montiert ist, um die Sendeantenne (35) und die erste Empfangsantenne (15) zueinander auszurichten.

12. System nach einem der Ansprüche 9 bis 11, wobei ein Abstand zwischen der Sendevorrichtung (34) insbesondere der Sendeantenne (35), und der ersten Empfangsvorrichtung (14), insbesondere der ersten Empfangsantenne (15), höchstens etwa 1000 m, vorzugsweise höchstens etwa 500 m, vorzugsweise höchstens etwa 100 m, beträgt und/oder eine Geschwindigkeit der ersten Straßenbaumaschine (1) relativ zu der Sendevorrichtung (34) während des Empfangens elektrischer Energie höchstens etwa 20 m/min, vorzugsweise höchstens etwa 6 m/min, beträgt.

13. System nach einem der Ansprüche 9 bis 12, **gekennzeichnet durch** eine zweite Stra-βenbaumaschine (1') mit einer zweiten Empfangsvorrichtung (214) zum drahtlosen Empfangen von elektrischer Energie, wobei die erste Straßenbaumaschine (1) eine Energieweiterleitungsvorrichtung (23) zum drahtlosen Weiterleiten der elektrischen Energie von der ersten Empfangsvorrichtung (14) und/oder dem Pufferspeicher (18) an die zweite Straßenbaumaschine (1') aufweist.

14. Verfahren zum Betreiben einer Straßenbaumaschine (1, 1'), das die Schritte umfasst:
Versorgen einer außerhalb der Straßenbaumaschine (1, 1') angeordneten, externen Sendevorrichtung (34) mit elektrischer Energie mittels einer Energiequelle (40),
Drahtloses Übertragen der elektrischen Energie von der Sendevorrichtung (34) an eine Empfangsvorrichtung (14, 214) der Straßenbaumaschine (1, 1'),
Weiterleiten der elektrischen Energie von der Empfangsvorrichtung (14, 214) an einen Elektroantrieb (3) und/oder zumindest einen elektrischen Verbraucher (11, 211) der Straßenbaumaschine (1, 1'), und
Bewegen der Straßenbaumaschine (1, 1') mittels des Elektroantriebs (3) und/oder Betreiben des elektrischen Verbrauchers (11, 211) mittels der elektrischen Energie.

15. Verfahren nach Anspruch 14, wobei die Straßenbaumaschine (1, 1') einen Pufferspeicher (18) zum Speichern von elektrischer Energie umfasst, wobei die Empfangsvorrichtung (14, 214) die elektrische Energie an den Pufferspeicher (18) weiterleitet, wobei der Pufferspeicher (18) die elektrische Energie an den Elektroantrieb (3) und/oder den elektrischen Verbraucher (11, 211) weiterleitet.
